# EUROPEAN PATENT APPLICATION

(11) **EP 4 804 578 A1**
(43) Date of publication of application: **09.09.2026**
(21) Application number: 25762282.9
(22) Date of filing: 07.01.2025
(51) Int. Cl.: H04W 4/80, H04W 12/33, H04W 12/69, H04M 1/72412, H04M 1/60, G06F 3/16, H04R 3/12, H04W 88/06

(54) **ELECTRONIC DEVICE AND CONTROL METHOD THEREFOR**

(30) Priority: 26.02.2024 KR 20240027463
(71) Applicant: Samsung Electronics Co., Ltd., Suwon-si, Gyeonggi-do 16677 (KR)
(72) Inventor: KIM, Jinman, Suwon-si, Gyeonggi-do 16677 (KR)
(74) Representative: Appleyard Lees IP LLP
(86) International application number: PCT/KR2025/000335
(87) International publication number: WO 2025/183347

(57) **Abstract**

An electronic device and a control method therefor are provided. The present electronic device comprises: a plurality of communication interfaces; a microphone; a memory for storing at least one instruction; and a processor connected to the plurality of communication interfaces, the microphone, and the memory in order to control the electronic device. The processor executes at least one instruction so as to: transmit an advertising signal including an advertising packet through a first communication interface from among a plurality of communication interfaces; identify an external device for a communication connection on the basis of preset sound when the preset sound generated from an external device is received through the microphone; transmit the advertising signal in the preset pattern through the first communication interface; and perform communication connection with the external device through the first communication interface when a response signal is received on the basis of the advertising signal of the preset pattern.

## Description

### [Technical Field]

The present disclosure relates to an electronic apparatus and a control method thereof, and more particularly, to an electronic apparatus that performs a communication connection by securing reliability of a communication connection between the electronic apparatus and an external apparatus and a control method thereof.

### [Background Art]

Recently, many external apparatuses may be communicatively connected to an electronic apparatus (e.g., a TV). In particular, the electronic apparatus may perform a communication connection with an external apparatus (e.g., a sound bar) for outputting an audio signal of content reproduced by the electronic apparatus.

In particular, when the prior art electronic apparatus performs a communication connection with an external apparatus through a Bluetooth communication interface, if the communication connection is performed only through the Bluetooth communication interface, the electronic apparatus may perform a communication connection with an external apparatus outside the home rather than an external apparatus inside the home. To prevent such a problem, the electronic apparatus may perform a secure communication connection with the external apparatus by transmitting and receiving a security code through an IR communication interface in addition to the Bluetooth communication interface.

However, the electronic apparatus and the external apparatus may fail to recognize an IR signal due to distance, obstacles, and the like, and due to a distance difference between the electronic apparatus and the external apparatus, accuracy may be insufficient, resulting in a problem in that a communication connection between unintended apparatuses occurs.

### [Disclosure of Invention]

### [Solution to Problem]

An electronic apparatus according to an embodiment includes a plurality of communication interfaces, a microphone, memory storing at least one instruction, and a processor connected to the plurality of communication interfaces, the microphone, and the memory and configured to control the electronic apparatus, and the processor, by executing the at least one instruction, is configured to transmit an advertising signal including an advertising packet through a first communication interface among the plurality of communication interfaces, based on a preset sound generated from an external apparatus being received through the microphone, identify the external apparatus for a communication connection based on the preset sound, and transmit the advertising signal in a preset pattern through the first communication interface, and based on a response signal being received based on the advertising signal of the preset pattern, perform a communication connection with the external apparatus through the first communication interface.

The processor may be configured to, after a communication connection is established with an external apparatus through the first communication interface, transmit a signal including code information for a secure connection through a second communication interface, and based on a response signal being received from the external apparatus in response to the signal including the code information, perform a secure communication connection with the external apparatus through the first communication interface.

The processor may be configured to, after the secure communication connection is performed, transmit information for a communication connection through a third communication interface through the first communication interface, and perform a communication connection with the external apparatus through the third communication interface based on information for a communication connection through the third communication interface.

The processor may be configured to transmit, through at least one of the first communication interface or the third communication interface, a control command to at least one peripheral device to control transmission of a signal including code information for the secure connection to the external apparatus.

The first communication interface may be a Bluetooth communication interface, the second communication interface may be an IR communication interface, and the third communication interface may be a Wi-Fi communication interface.

The processor may be configured to transmit an audio signal to the external apparatus through the Wi-Fi communication interface.

The information for a communication connection through the third communication interface may include information on an access point to which the electronic apparatus is connected and information on a password of an access point.

The code information for the secure connection may include information corresponding to the identified external apparatus.

The preset sound may be different according to model information of an external apparatus.

The preset pattern may be a pattern in which transmission of the advertising signal is turned on and off a preset number of times.

A control method of an electronic apparatus according to an embodiment includes transmitting an advertising signal including an advertising packet through a first communication interface among a plurality of communication interfaces, based on a preset sound generated from an external apparatus being received through a microphone, identifying the external apparatus for a communication connection based on the preset sound, and transmitting the advertising signal in a preset pattern through the first communication interface, and based on a response signal being received based on the advertising signal of the preset pattern, performing a communication connection with the external apparatus through the first communication interface.

The method may include, after a communication connection is established with an external apparatus through the first communication interface, transmitting a signal including code information for a secure connection through a second communication interface, and based on a response signal being received from the external apparatus in response to the signal including the code information, performing a secure communication connection with the external apparatus through the first communication interface.

The method may include, after the secure communication connection is performed, transmitting information for a communication connection through a third communication interface through the first communication interface, and performing a communication connection with the external apparatus through the third communication interface based on information for a communication connection through the third communication interface.

The method may further include transmitting, through at least one of the first communication interface or the third communication interface, a control command to at least one peripheral device to control transmission of a signal including code information for the secure connection to the external apparatus.

The first communication interface may be a Bluetooth communication interface, the second communication interface may be an IR communication interface, and the third communication interface may be a Wi-Fi communication interface.

The method may include transmitting an audio signal to the external apparatus through the Wi-Fi communication interface.

The information for a communication connection through the third communication interface may include information on an access point to which the electronic apparatus is connected and information on a password of an access point.

The code information for the secure connection may include information corresponding to the identified external apparatus.

The preset sound may be different according to model information of an external apparatus.

The preset pattern may be a pattern in which transmission of the advertising signal is turned on and off a preset number of times.

In a non-transitory computer-readable recording medium including a program for executing a control method of an electronic apparatus according to an embodiment, the control method includes transmitting an advertising signal including an advertising packet through a first communication interface among a plurality of communication interfaces, based on a preset sound generated from an external apparatus being received through a microphone, identifying the external apparatus for a communication connection based on the preset sound, and transmitting the advertising signal in a preset pattern through the first communication interface, and based on a response signal being received based on the advertising signal of the preset pattern, performing a communication connection with the external apparatus through the first communication interface.

### [Brief Description of Drawings]

FIG. 1 is a view illustrating a system for a communication connection between an electronic apparatus and an external apparatus according to an embodiment;
FIG. 2 is a block diagram illustrating a configuration of an electronic apparatus according to an embodiment;
FIG. 3 is a block diagram illustrating a configuration of an external apparatus according to an embodiment;
FIG. 4 is a sequence view provided to explain a method for a communication connection between an electronic apparatus and an external apparatus according to an embodiment;
FIG. 5 is a sequence view provided to explain a method for a Wi-Fi communication connection between an electronic apparatus and an external apparatus according to an embodiment; and
FIG. 6 is a flowchart provided to explain a control method of an electronic apparatus according to an embodiment.

### [Mode for Invention]

The present disclosure may be variously modified and have several embodiments, and specific embodiments of the present disclosure are thus illustrated in the accompanying drawings and described in detail in the specification. However, it should be understood that the scope of the present disclosure are not limited to specific embodiments, and include all modifications, equivalents, and alternatives according to an embodiment of the present disclosure. Throughout the accompanying drawings, similar components may be denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (e.g., a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components. These expressions are only used to distinguish one component and another component from each other, and do not limit the corresponding components.

When any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

On the other hand, when any component (e.g., the first component) is mentioned to be "directly coupled with/to" or "directly connected to" another component (e.g., the second component), it should be understood that yet another component (e.g., the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in detail with reference to the accompanying drawings so that those skilled in the art to which the present disclosure pertains may easily practice the present disclosure.

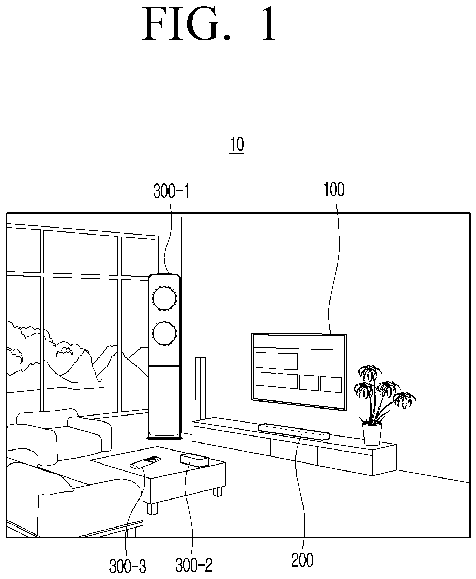

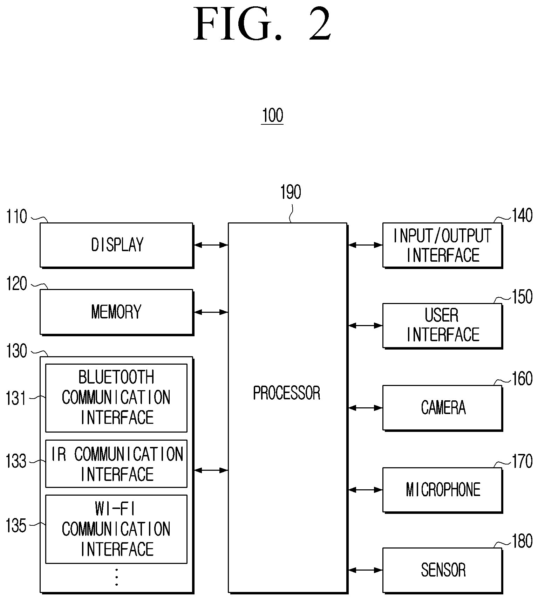

FIG. 1 is a view illustrating a system for a communication connection between an electronic apparatus and an external apparatus according to an embodiment. As shown in FIG. 1, a system 10 may include an electronic apparatus 100, an external apparatus 200, and a plurality of peripheral devices 300-1, 300-2, and 300-3. The electronic apparatus 100 is a device capable of providing content and, as illustrated in FIG. 1, may be implemented as a TV. However, this is merely an embodiment, and the electronic apparatus 100 may be implemented as various devices such as a set-top box, a desktop PC, a laptop PC, and a projector. The external apparatus 200 is a device connected to the electronic apparatus 100 and capable of providing an audio signal of content provided by the electronic apparatus 100, and as illustrated in FIG. 2, the external apparatus 200 may be implemented as a sound bar. However, this is merely an embodiment, and the external apparatus 200 may be implemented as various devices such as a speaker, an AI speaker, and a projector. The peripheral device 300 is a device directly connected to the electronic apparatus 100 or connected through a home network system, and may be implemented as various devices such as an air conditioner 300-2, an AI speaker 300-3, and a remote controller 300-1.

The electronic apparatus 100 may perform a communication connection with the external apparatus 200 for outputting an audio signal of content provided by the electronic apparatus 100.

Specifically, the electronic apparatus 100 may transmit (or broadcast) an advertising signal including an advertising packet through a first communication interface (e.g., a Bluetooth communication interface). When the advertising signal is received by the external apparatus 200, the external apparatus 200 may output a preset sound through a speaker.

The electronic apparatus 100 may receive the preset sound through a microphone. The electronic apparatus 100 may identify the external apparatus 200 based on the preset sound, and may transmit (or broadcast) an advertising signal having a preset pattern again.

The external apparatus 200 may transmit a response signal in response to the advertising signal having the preset pattern, and the electronic apparatus 100 may perform a communication connection with the external apparatus 200 through the first communication interface. In this case, the communication connection may be a Serial Port Profile (SPP) communication connection.

According to an embodiment, the electronic apparatus 100 may transmit code information for a secure communication connection through a second communication interface (e.g., an IR communication interface) in order to perform the secure communication connection. In this case, the code information may be referred to as a security code or an authentication code. When the external apparatus 200 identifies the electronic apparatus 100 based on the code information, the electronic apparatus 100 may perform a secure communication connection with the external apparatus 200.

After the secure communication connection is performed, the electronic apparatus 100 may transmit, through the first communication interface, information for a communication connection through a third communication interface (e.g., a Wi-Fi communication interface). The external apparatus 200 may perform a communication connection with the electronic apparatus 100 through the third communication interface based on the information for the communication connection through the third communication interface.

Accordingly, the electronic apparatus 100 may transmit an audio signal of content reproduced by the electronic apparatus 100 through the third communication interface, and the external apparatus 200 may output the audio signal received from the electronic apparatus 100.

Meanwhile, according to an embodiment, the electronic apparatus 100 may transmit the code information for the secure communication connection, but this is merely an embodiment, and the code information for the secure communication connection may be transmitted through a peripheral device 300 connected to the electronic apparatus 100. Specifically, due to a positional constraint between the electronic apparatus 100 and the external apparatus 200, the external apparatus 200 may fail to receive the code information for the secure communication connection received through the second communication interface and thus, the electronic apparatus 100 may not only directly transmit the code information for the secure communication connection to the external apparatus 200 but may also transmit, to a plurality of peripheral devices 300, a control command instructing the peripheral devices 300 to transmit the code information for the secure communication connection through the second communication interface. Accordingly, the plurality of peripheral devices 300 may transmit the code information for the secure communication connection to the outside through the second communication interface. When the external apparatus 200 receives the code information for the secure communication connection from one of the electronic apparatus 100 and the plurality of peripheral devices 300-1, 300-2, and 300-3, the external apparatus 200 may perform the secure communication connection with the electronic apparatus 100 based on the code information for the secure communication connection.

As described above, by performing the communication connection between the electronic apparatus 100 and the external apparatus 200, not only a more secure communication connection may be achieved, but also a limitation in receiving an IR signal by the external apparatus 200 due to the positions of the electronic apparatus 100 and the external apparatus 200 may be overcome.

FIG. 2 is a block diagram illustrating a configuration of an electronic apparatus according to an embodiment. As shown in FIG. 2, the electronic apparatus 100 may include a display 110, memory 120, a communication interface 130, an input/output interface 140, a user interface 150, a camera 160, a microphone 170, a sensor 180, and a processor 190. However, this is merely an embodiment, and depending on the type of the electronic apparatus 100, some components may be omitted or additional components may be included. For example, when the electronic apparatus 100 is implemented as a set-top box, the electronic apparatus 100 may not include the display 110.

The display 110 may include various types of display panels such as a Liquid Crystal Display (LCD) panel, an Organic Light Emitting Diode (OLED) panel, an Active-Matrix Organic Light-Emitting Diode (AM-OLED) panel, a Liquid Crystal on Silicon (LCoS) panel, a Quantum Dot Light-Emitting Diode (QLED) panel, a Digital Light Processing (DLP) panel, a Plasma Display Panel (PDP), an inorganic LED panel, and a micro LED panel, but is not limited thereto. Meanwhile, the display 110 may form a touch screen together with a touch panel, and may also be implemented as a flexible panel.

In particular, the display 110 may display content received from various sources (e.g., the communication interface 130, the input/output interface 140, and the like).

The memory 120 may store an Operating System (OS) for controlling overall operations of components of the electronic apparatus 100 and instructions or data related to the components of the electronic apparatus 100. In particular, the memory 120 may include various modules for a communication connection with the external apparatus 200. When an event for a communication connection with the external apparatus 200 occurs, the electronic apparatus 100 may load, into volatile memory, data for performing various operations by a plurality of modules for the communication connection with the external apparatus 200, the modules being stored in non-volatile memory. Here, loading refers to an operation of reading data stored in the non-volatile memory into the volatile memory so that the processor 190 can access the data.

In this case, the memory 120 may store information on a preset sound corresponding to model information of the external apparatus 200.

Meanwhile, the memory 120 may be implemented as a non-volatile memory (e.g., a hard disk, a Solid State Drive (SSD), or a flash memory), a volatile memory, or a memory included in the processor 190.

The communication interface 130 may include at least one circuit and may perform communication with various types of external devices or servers. In particular, according to an embodiment, the communication interface 130 may include a plurality of types of communication interfaces. For example, as shown in FIG. 2, the communication interface 130 may include a Bluetooth communication interface 131, an Infrared (IR) communication interface 133, and a Wi-Fi communication interface 135.

The Bluetooth communication interface 131 is one of short-range wireless communication methods that transmit and receive data between devices using short-range Ultra High Frequency (UHF) radio waves of 2.4 to 2.485 GHz included in an Industrial, Scientific and Medical (ISM) band. In particular, among the communication interfaces 130, the Bluetooth communication interface 131 may transmit, to the external apparatus 200, information for performing a communication connection using the Wi-Fi communication interface 135. In this case, the information for performing the communication connection using the Wi-Fi communication interface 135 may include address information of an access point and password information of the access point for a Wi-Fi communication connection.

The Infrared (IR) communication interface 133 is one of short-range wireless communication methods that transmit and receive data using infrared rays, and may include a transmitter (Tx) for transmitting infrared rays and a receiver (Rx) for receiving infrared rays. The IR communication interface 133 may transmit, to the external apparatus 200, code information for performing a secure communication connection using the Bluetooth communication interface 131. In this case, the code information for the secure communication connection may include information corresponding to the external apparatus 200 recognized by the electronic apparatus 100.

The Wi-Fi communication interface 135 is a data transmission method between different devices based on IEEE 802.11, which is one of wireless communication standard technologies. In particular, the Wi-Fi communication interface 135 may transmit an audio signal for content to the external apparatus 200.

In addition, the communication interface 130 may further include various communication interfaces in addition to the Bluetooth communication interface 131, the IR communication interface 133, and the Wi-Fi communication interface 135 described above (e.g., a cellular communication module, a third generation (3G) mobile communication module, a fourth generation (4G) mobile communication module, a Long Term Evolution (LTE) communication module, a fifth generation (5G) mobile communication module, a Near Field Communication (NFC) module, and the like).

The input/output interface 140 is configured to input /output at least one of an audio signal or a video signal. For example, the input/output interface 140 may be a High Definition Multimedia Interface (HDMI), but this is merely an embodiment, and the input/output interface 140 may be one of a Mobile High-Definition Link (MHL), a Universal Serial Bus (USB), a Display Port (DP), a Thunderbolt interface, a Video Graphics Array (VGA) port, an RGB port, a D-subminiature (D-SUB), and a Digital Visual Interface (DVI). According to an implementation example, the input/output interface 140 may include a port for inputting and outputting only an audio signal and a port for inputting and outputting only a video signal as separate ports, or may be implemented as a single port that inputs and outputs both the audio signal and the video signal.

In particular, the input/output interface 140 may transmit a high-quality audio signal (e.g., a 5.1 channel audio signal, etc.) to the external apparatus 200.

The user interface 150 may include a button, a lever, a switch, a touch-type interface, and the like. In this case, the touch-type interface may be implemented to receive a user input through a user's touch on a screen of the display 110 of the electronic apparatus 100.

In particular, the user interface 150 may receive various user commands such as a user command for a communication connection or a user command for reproducing content.

The camera 160 may capture a still image and a moving image. The camera 160 according to various embodiments may include one or more lenses, an image sensor, an image signal processor, and a flash. The one or more lenses may include a telephoto lens, a wide-angle lens, and a super wide-angle lens disposed on a surface of the electronic apparatus 100, and may further include a three-dimensional depth lens. The camera 160 may be disposed on a surface (e.g., a rear surface or a front surface) of the electronic apparatus 100, but the configuration is not limited thereto, and various embodiments according to the present disclosure may be implemented through a connection with the camera 160 separately provided separately outside the electronic apparatus 100.

The microphone 170 may refer to a device that detects sound and converts the detected sound into an electrical signal. For example, the microphone 170 may detect a voice in real time and convert the detected voice into an electrical signal so that the electronic apparatus 100 performs an operation corresponding to the electrical signal. The microphone 170 may include a Text-to-Speech (TTS) module or a Speech-to-Text (STT) module.

The microphone 170 may be included not only as a component of the electronic apparatus 100 but also as a component of a remote controller (not shown) that controls the electronic apparatus 100. In particular, the microphone 170 may receive a preset sound generated (or output) from the external apparatus 200.

According to another embodiment, a remote control application (APP) may be installed in the electronic apparatus 100, and a user voice command may be detected through the microphone 170, and operations such as generation/editing of a floor plan image may be performed through a voice recognition function.

The sensor 180 may detect a state of the electronic apparatus 100 (e.g., movement) or an external environment state (e.g., a user state), and may generate an electrical signal or a data value corresponding to the detected state. The sensor 180 may include, for example, a gesture sensor and an acceleration sensor.

The processor 190 may control the electronic apparatus 100 according to at least one instruction stored in the memory 120.

In particular, the processor 190 may include one or more processors. Specifically, the one or more processors may include at least one of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, and a machine learning accelerator. The one or more processors may control one or more other components of the electronic apparatus or any combination thereof and may perform operations related to communication or data processing. The one or more processors may execute one or more programs or instructions stored in the memory. For example, the one or more processors may execute one or more instructions stored in the memory to perform a method according to an embodiment of the present disclosure.

In a case where the method according to an embodiment of the disclosure includes a plurality of operations, the plurality of operations may be performed by one processor or by a plurality of processors. In other words, in a case where a first operation, a second operation, and a third operation are performed by the method according to an embodiment, all of the first operation, the second operation, and the third operation may be performed by a first processor, or the first operation and the second operation may be performed by the first processor (e.g., a general-purpose processor) and the third operation may be performed by a second processor (e.g., an artificial intelligence-dedicated processor). For example, according to an embodiment, operations such as identifying corners in a handwriting image or correcting spaces in the handwriting image using a neural network model may be performed by a processor that performs parallel operations, such as a GPU or an NPU, and operations such as generating/editing a floor plan image or post-processing may be performed by a general-purpose processor such as a CPU.

The one or more processors may be implemented as a single-core processor including one core, or may be implemented as one or more multi-core processors including a plurality of cores (e.g., homogeneous multiple cores or heterogeneous multiple cores). In a case where the at least one processor is implemented as multi-core processors, each of the plurality of cores included in the multi-core processors may include a processor internal memory such as a cache memory or an on-chip memory, and a common cache shared by the plurality of cores may be included in the multi-core processors. In addition, each of the plurality of cores (or some of the plurality of cores) included in the multi-core processors may independently read and execute program instructions for implementing the method according to an embodiment, or all (or some) of the plurality of cores may be linked to each other to read and execute program instructions for implementing the method according to an embodiment.

In a case where the method according to an embodiment includes a plurality of operations, the plurality of operations may be performed by one of the plurality of cores included in the multi-core processors, or may be performed by the plurality of cores. For example, in a case where a first operation, a second operation, and a third operation are performed by the method according to an embodiment, all of the first operation, the second operation, and the third operation may be performed by a first core included in the multi-core processors, or the first operation and the second operation may be performed by the first core included in the multi-core processors, and the third operation may be performed by a second core included in the multi-core processors.

In embodiments of the disclosure, the processor 190 may refer to a system on a chip (SoC) in which one or more processors and other electronic components are integrated, a single-core processor, multi-core processors, or a core included in the single-core processor or the multi-core processors. Here, the core may be implemented as CPU, GPU, APU, MIC, NPU, hardware accelerator, machine learning accelerator, or the like, but the embodiments of the disclosure are not limited thereto.

In particular, the processor 190 may transmit an advertising signal including an advertising packet through a first communication interface among a plurality of communication interfaces by executing at least one instruction stored in the memory 120. When a preset sound generated from the external apparatus is received through the microphone 170, the processor 190 may identify the external apparatus 200 for a communication connection based on the preset sound, and may transmit the advertising signal in a preset pattern through the first communication interface. When a response signal is received based on the advertising signal having the preset pattern, the processor 190 may perform a communication connection with the external apparatus 200 through the first communication interface. In this case, the first communication interface may be the Bluetooth communication interface 131.

According to an embodiment, after a communication connection with the external apparatus 200 is established through the first communication interface, the processor 190 may transmit a signal including code information for a secure connection through a second communication interface. When a response signal is received from the external apparatus 200 in response to the signal including the code information, the processor 190 may perform a secure communication connection with the external apparatus through the first communication interface. In this case, the second communication interface may be the IR communication interface 133.

According an embodiment, after the secure communication connection is performed, the processor 190 may transmit, through the first communication interface, information for a communication connection through a third communication interface. The processor 190 may perform a communication connection with the external apparatus 200 through the third communication interface based on the information for the communication connection through the third communication interface. In this case, the third communication interface may be the Wi-Fi communication interface 135. In particular, the processor 190 may transmit an audio signal to the external apparatus 200 through the Wi-Fi communication interface 135.

According to an embodiment, the processor 190 may transmit, to at least one peripheral device 300, a control command for controlling transmission of a signal including code information for a secure connection to the external apparatus 200 through at least one of the first communication interface or the third communication interface.

According to an embodiment, the information for the communication connection through the third communication interface may include information on an access point to which the electronic apparatus 100 is connected and information on a password of the access point.

According to an embodiment, the code information for the secure connection may include information corresponding to the identified external apparatus 200.

According to an embodiment, the preset sound may vary depending on model information of the external apparatus 200.

According to an embodiment, the preset pattern may be a pattern in which transmission of an advertising signal is turned on and off a preset number of times.

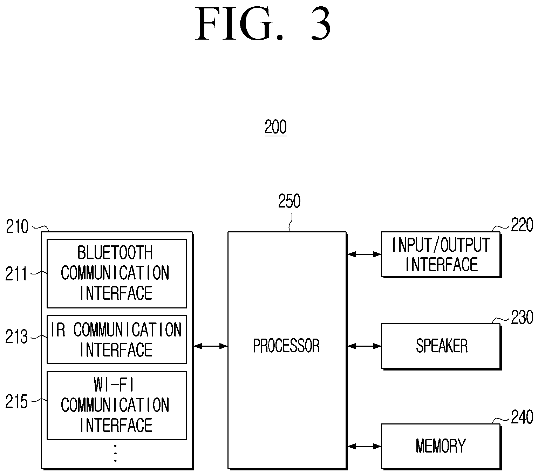

FIG. 3 is a block diagram illustrating a configuration of an external apparatus according to an embodiment. As shown in FIG. 3, the external apparatus 200 may include a communication interface 210, an input/output interface 220, a speaker 230, memory 240, and a processor 250. However, this is merely an embodiment, and depending on the type of the electronic apparatus 100, some components may be omitted or additional components may be included.

The communication interface 210 may include at least one circuit and may perform communication with various types of external devices or servers. In particular, according to an embodiment of the present disclosure, the communication interface 210 may include a plurality of types of communication interfaces. For example, as shown in FIG. 3, the communication interface 210 may include a Bluetooth communication interface 211, an Infrared (IR) communication interface 213, and a Wi-Fi communication interface 215.

The Bluetooth communication interface 211 may receive, from the electronic apparatus 100, information for performing a communication connection using the Wi-Fi communication interface 215. The IR communication interface 213 may receive, from the electronic apparatus 100, code information for performing a secure communication connection using the Bluetooth communication interface 211. The Wi-Fi communication interface 215 may receive, from the electronic apparatus 100, an audio signal for content.

In addition, the communication interface 210 may further include various communication interfaces in addition to the Bluetooth communication interface 211, the IR communication interface 213, and the Wi-Fi communication interface 215 (e.g., a cellular communication module, a third generation (3G) mobile communication module, a fourth generation (4G) mobile communication module, a Long Term Evolution (LTE) communication module, a fifth generation (5G) mobile communication module, a Near Field Communication (NFC) module, and the like).

The input/output interface 220 is configured to input/output at least one of an audio signal or a video signal. For example, the input/output interface 220 may be a High Definition Multimedia Interface (HDMI), but this is merely an embodiment, and the input/output interface 220 may be one of a Mobile High-Definition Link (MHL), a Universal Serial Bus (USB), a Display Port (DP), a Thunderbolt interface, a Video Graphics Array (VGA) port, an RGB port, a D-subminiature (D-SUB), and a Digital Visual Interface (DVI). In particular, the input/output interface 220 may receive a high-quality audio signal (e.g., a 5.1 channel audio signal, etc.) from the electronic apparatus 100.

The speaker 230 is configured to output an audio signal. According to an embodiment, the speaker 230 may include a plurality of speaker modules to output an audio signal of a plurality of channels. In addition, the speaker 230 may be embedded in the external apparatus 200, and may also be electrically connected outside the external apparatus 200.

Meanwhile, the speaker 230 may output an audio signal of content received from the electronic apparatus 100. In addition, the speaker 230 may output a preset sound to enhance security while performing a communication connection. In this case, the preset sound may be determined according to model information of the external apparatus 200, and may have different characteristics (e.g., volume, pitch, timbre, etc.) according to the model information.

The memory 240 may store an Operating System (OS) for controlling overall operations of components of the external apparatus 200 and instructions or data related to the components of the external apparatus 200. In particular, the memory 240 may include various modules for a communication connection with the electronic apparatus 100. In particular, when an event for a communication connection with the electronic apparatus 100 occurs, the external apparatus 200 may load data for performing various operations by the various modules for the communication connection with the electronic apparatus 100 stored in a non-volatile memory into a volatile memory. Here, loading refers to an operation of reading data stored in the non-volatile memory into the volatile memory so that the processor 250 can access the data. Meanwhile, the memory 240 may be implemented as a non-volatile memory (e.g., a hard disk, a Solid State Drive (SSD), or a flash memory), a volatile memory, or a memory included in the processor 250.

The processor 250 may control the external apparatus 200 according to at least one instruction stored in the memory 240. In particular, the processor 250 may include one or more processors, as described above with respect to the processor 190 of the electronic apparatus 100.

In particular, when a preset event (e.g., an event in which power is initially applied or an event in which a user input for a communication connection is received) is detected, the processor 250 may receive an advertising signal broadcast through the Bluetooth communication interface 211.

When the advertising signal is received, the processor 250 may control the speaker 230 to output a preset sound. In this case, the preset sound may be determined according to model information of the external apparatus 200.

When an advertising signal having a preset pattern is received again from the electronic apparatus 100 in response to the preset sound, the processor 250 may perform a communication connection with the electronic apparatus 100 through a first communication interface (e.g., the Bluetooth communication interface 211).

In addition, after a communication connection with the electronic apparatus 100 is established, the processor 250 may receive code information for a secure communication connection through a second communication interface (e.g., the IR communication interface 213). In this case, the code information may include information corresponding to the external apparatus 200.

The processor 250 may authenticate the electronic apparatus 100 based on the code information, and may perform a secure communication connection with the electronic apparatus 100 according to a result of the authentication.

After the secure communication connection is performed, the processor 250 may receive, through the first communication interface, information for performing a communication connection using a third communication interface (e.g., the Wi-Fi communication interface 215). Then, the processor 250 may perform a communication connection with the electronic apparatus 100 based on the information for performing the communication connection using the third communication interface.

Subsequently, the processor 250 may receive, through the third communication interface, an audio signal of content reproduced by the electronic apparatus 100 and may output the audio signal through the speaker 230.

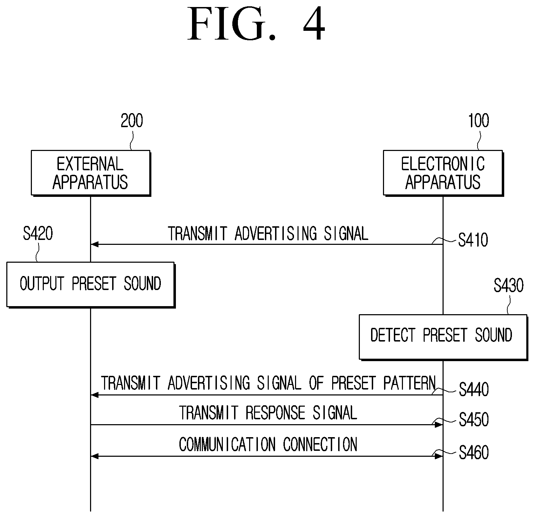

FIG. 4 is a sequence view provided to explain a method for a communication connection between an electronic apparatus and an external apparatus according to an embodiment. Meanwhile, when the external apparatus 100 is initially unboxed and a communication connection is required, or when an event in which a user command for a communication connection is input from the electronic apparatus 100 or the external apparatus 200 is detected, the method illustrated in FIG. 4 may be performed.

The electronic apparatus 100 transmits an advertising signal (S410). In this case, the electronic apparatus 100 may transmit, through the Bluetooth communication interface 131, an advertising signal including an advertising packet. The advertising packet includes at least one of a Device Info field, a Device ID field, a Universally Unique Identifier (UUID) field, a Major field, a Minor field, a Control Flag field, a Private Info Flag field, or a Data field. The Device Info field contains device information such as a serial number, and includes information required for a pairing process. The Device ID field is a field including a device ID of the external apparatus 200 to which the electronic apparatus 100 intends to transmit data. After pairing is completed in the electronic apparatus 100, a user of the electronic apparatus 100 sets and registers an encryption key and the device ID, and the user may transmit the advertising packet to the specific external apparatus 200 through broadcasting using the device ID within a Bluetooth range. The UUID field is a field used to verify an identity of a product, such as a company name of the device. The Major field is a field used to distinguish a broad place where the device is used. The Minor field is a field used to distinguish a narrow place and an individual device where the device is used. The Control Flag field indicates whether data included in the Data field is a control message. When the Control Flag indicates that the data is a control message, the control message is included in the Data field. The Private Info Flag field is a field indicating whether the data included in the Data field is personal information. For example, when a value of the Private Info Flag is 1, the data is classified as personal information, and the data in the Data field may be encrypted. In this case, the electronic apparatus 100 may transmit the advertising signal in a broadcasting manner.

When the external apparatus 200 receives (or scans) the advertising signal, the external apparatus 200 outputs a preset sound (S420). In this case, the preset sound may correspond to model information of the external apparatus 200. In other words, the external apparatus 200 may output the preset sound based on the model information of the external apparatus 200. For example, when a model of the external apparatus 200 is a first model, the processor 250 may control the speaker 230 to output a preset first sound having sound characteristics corresponding to the first model, and when the model of the external apparatus 200 is a second model, the processor 250 may control the speaker 230 to output a preset second sound having sound characteristics corresponding to the second model.

Meanwhile, in the above-described embodiment, it has been described that the external apparatus 200 outputs the preset sound when the advertising signal is received, but this is merely an embodiment, and the preset sound may be output when a preset event (e.g., an initial booting event or an event in which a user command for a communication connection is received) occurs without receiving the advertising signal.

The electronic apparatus 100 detects the preset sound output by the external apparatus 200 (S430). In other words, the electronic apparatus 100 may store, in the memory 120, information on a plurality of preset sounds corresponding to model information of a plurality of external apparatuses. In addition, the electronic apparatus 100 may identify the preset sound output by the external apparatus 200 among the plurality of preset sounds stored in the memory 120, and may identify the external apparatus 200 based on the identified preset sound. In other words, the electronic apparatus 100 may identify model information of the external apparatus 200 based on the identified preset sound.

In this case, the electronic apparatus 100 may identify whether the preset sound output by the external apparatus 200 is equal to or greater than a preset level. In other words, when the preset sound equal to or greater than the preset level is detected, the electronic apparatus 100 may recognize that the external apparatus 200 is at a close distance. By recognizing that the external apparatus 200 is at a close distance and performing a communication connection, the external apparatus 200 can more accurately recognize the electronic apparatus 100 to be connected when scanning a Bluetooth signal.

The electronic apparatus 100 transmits an advertising signal having a preset pattern (S440). In other words, when the preset sound is detected, the electronic apparatus 100 may transmit the advertising signal such that it has a pattern in which transmission of the advertising signal is turned on and off a preset number of times. For example, the electronic apparatus 100 may perform an operation of turning on and off the advertising signal a preset number of times (e.g., two to three times). Alternatively, the electronic apparatus 100 may perform, a preset number of times, an operation of turning on the advertising signal for a first time and turning off the advertising signal for a second time. In this case, the preset pattern is a predefined pattern, and may be stored in each of the electronic apparatus 100 and the external apparatus 200.

The external apparatus 200 transmits a response signal in response to the advertising signal having the preset pattern (S450).

When the response signal is transmitted, the electronic apparatus 100 and the external apparatus 200 perform a communication connection (S460). In this case, the electronic apparatus 100 and the external apparatus 200 may perform a Serial Port Profile (SPP) communication connection. In this case, SPP communication is a service that performs serial communication through a virtual serial port and can perform the same function as RS-232. When an electronic apparatus supporting SPP communication is connected to a device such as a desktop, a virtual COM port is generated in the device, and wireless RS-232 communication may be performed.

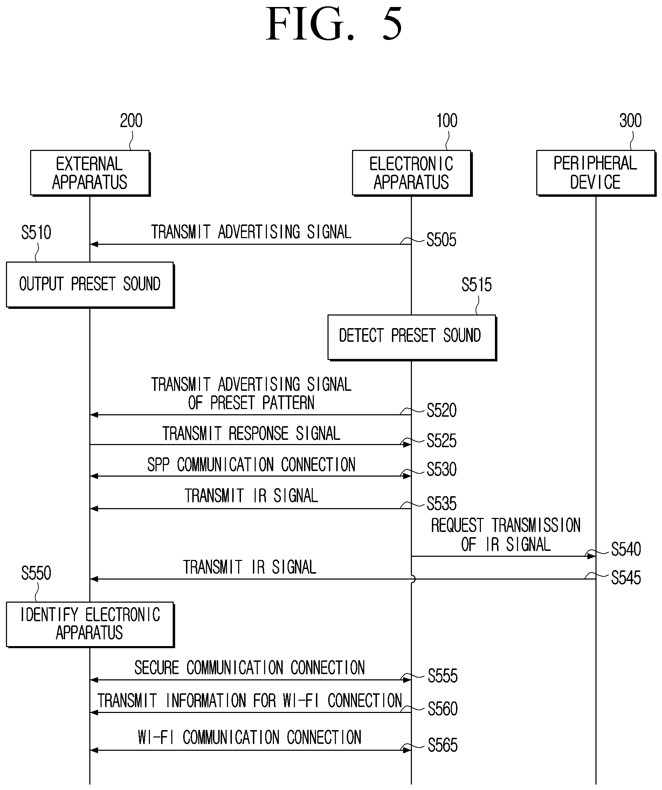

FIG. 5 is a sequence view provided to explain a method for a Wi-Fi communication connection between an electronic apparatus and an external apparatus according to an embodiment. First, steps S505, S510, S515, S520, S525, and S530 disclosed in FIG. 5 are the same as steps S410, S420, S430, S440, S450, and S460 described above with reference to FIG. 4, and thus redundant descriptions thereof will be omitted.

After the SPP communication is connected, the electronic apparatus 100 may transmit an IR signal to the external apparatus 200 (S535). In this case, the IR signal may include code information for secure communication. In this case, the secure communication may include performing communication by identifying or authenticating the external apparatus 200 by the electronic apparatus 100. In other words, the IR signal may include code information for authenticating the external apparatus 200.

The code information may include information corresponding to the external apparatus 200 identified in step S515. For example, when the identified external apparatus 200 is model A, the code information may include "0X11," and when the external apparatus 200 is model B, the code information may include "0X21." In this case, the code information is predefined information according to model information of the external apparatus 200, and the code information may be stored in each of the electronic apparatus 100 and the external apparatus 200.

In this case, the electronic apparatus 100 may request the peripheral device 300 to transmit the IR signal (S540). Specifically, the electronic apparatus 100 may identify a directly connected peripheral device (e.g., a remote controller) or a peripheral device connected through a home network (e.g., an air conditioner, an air purifier, a robot cleaner, and the like). The electronic apparatus 100 may transmit, to the identified at least one peripheral device, a request signal including a control command for controlling transmission, to the external apparatus 200, of code information for a secure connection through at least one of a first communication interface (e.g., a Bluetooth communication interface) or a third communication interface (e.g., a Wi-Fi communication interface).

In this case, the signal for requesting transmission of the IR signal may include code information for secure communication and information on the electronic apparatus 100. In particular, the electronic apparatus 100 may transmit the request signal to one peripheral device, but this is merely an embodiment, and the electronic apparatus 100 may transmit the request signal to a plurality of peripheral devices.

The peripheral device 300 may transmit the IR signal to the external apparatus 200 in response to the request signal for transmission of the IR signal (S545). In this case, the IR signal may include code information for secure communication, and the code information may include information corresponding to the external apparatus 200 and information on the electronic apparatus 100.

The external apparatus 200 may identify the electronic apparatus 100 based on the IR signal received from the electronic apparatus 100 or the IR signal received from the peripheral device 300 (S550).

When the electronic apparatus 100 is identified by the external apparatus 200, the electronic apparatus 100 and the external apparatus 200 may be connected through secure communication (S555). In other words, the electronic apparatus 100 may authenticate the external apparatus 200 to perform Bluetooth communication with enhanced security with the external apparatus 200.

After the secure communication is connected, the electronic apparatus 100 may transmit, to the external apparatus 200, information for a Wi-Fi communication connection (S560). In this case, the electronic apparatus 100 may transmit the information for the Wi-Fi communication connection through the first communication interface through which the secure connection has been performed. The information for the Wi-Fi communication connection may include information on an access point to which the electronic apparatus 100 is connected and information on a password of the access point.

The external apparatus 200 may perform a Wi-Fi communication connection with the electronic apparatus 100 based on the information for the Wi-Fi communication connection (S565). Specifically, the external apparatus 200 may connect to the access point to which the electronic apparatus 100 is connected based on the information for the Wi-Fi communication connection. The electronic apparatus 100 may create a Peer-to-Peer (P2P) Group Operation, and may perform a Wi-Fi Direct connection with the external apparatus 200 through a P2P interface.

Thereafter, when a command for reproducing content is input, the electronic apparatus 100 may display an image of the content through the display 110. In addition, the electronic apparatus 100 may transmit at least a portion of audio of the content to the external apparatus 200 through the third communication interface (e.g., the Wi-Fi communication interface), and the external apparatus 200 may output the audio of at least a portion of the content through the speaker 230.

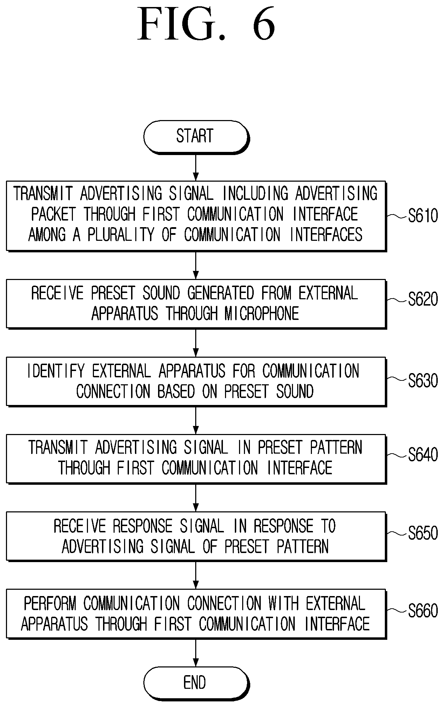

FIG. 6 is a flowchart provided to explain a control method of an electronic apparatus according to an embodiment.

The electronic apparatus 100 transmits an advertising signal including an advertising packet through a first communication interface among a plurality of communication interfaces (S610). In this case, the electronic apparatus 100 may transmit the advertising signal in a broadcasting manner.

The electronic apparatus 100 receives, through the microphone 170, a preset sound generated from the external apparatus 200 (S620). In other words, when the preset sound is generated by the external apparatus 200, the preset sound may differ according to model information of the external apparatus 200.

The electronic apparatus 100 identifies the external apparatus 200 for a communication connection based on the preset sound (S630). In other words, the electronic apparatus 100 may identify the external apparatus 200 based on the preset sound determined according to model information of the external apparatus 200.

The electronic apparatus 100 transmits the advertising signal in a preset pattern through the first communication interface (S640).

The electronic apparatus 100 receives a response signal in response to the advertising signal having the preset pattern (S650). In this case, the preset pattern may be a pattern in which transmission of the advertising signal is turned on and off a preset number of times.

The electronic apparatus 100 performs a communication connection with the external apparatus through the first communication interface (S660).

According to an embodiment, after a communication connection with the external apparatus 200 is established through the first communication interface, the electronic apparatus 100 may transmit, through a second communication interface, a signal including code information for a secure connection. When a response signal is received from the external apparatus 200 in response to the signal including the code information, the electronic apparatus 100 may perform a secure communication connection with the external apparatus 200 through the first communication interface. In this case, the code information for the secure connection may include information corresponding to the identified external apparatus.

According to an embodiment, after the secure communication connection is performed, the electronic apparatus 100 may transmit, through the first communication interface, information for a communication connection through a third communication interface. In addition, the electronic apparatus 100 may perform a communication connection with the external apparatus 200 through the third communication interface based on the information for the communication connection through the third communication interface. In this case, the information for the communication connection through the third communication interface may include information on an access point to which the electronic apparatus 100 is connected and information on a password of the access point.

According to an embodiment, the electronic apparatus 100 may transmit, to at least one peripheral device, a control command for controlling transmission, to the external apparatus 200, of a signal including code information for a secure connection through at least one of the first communication interface and the third communication interface.

According to an embodiment, the first communication interface may be a Bluetooth communication interface, the second communication interface may be an IR communication interface, and the third communication interface may be a Wi-Fi communication interface.

According to an embodiment, the electronic apparatus 100 may transmit an audio signal to the external apparatus 200 through the Wi-Fi communication interface.

Meanwhile, the method according to various embodiments of the present disclosure may be provided as being included in a computer program product. The computer program product may be traded between a seller and a buyer as a commodity. The computer program product may be distributed in the form of a machine-readable storage medium (e.g., a Compact Disc Read Only Memory (CD-ROM)), or may be distributed online (e.g., by downloading or uploading), directly between two user devices (e.g., smartphones), or through an application store (e.g., Play Store^{™}). In the case of online distribution, at least a part of the computer program product (e.g., a downloadable app) may be at least temporarily stored or temporarily generated in a machine-readable storage medium such as a manufacturer's server, an application store server, or a relay server.

The method according to various embodiments of the present disclosure may be implemented as software including instructions stored in a machine-readable storage medium, which can be read by machine (e.g.: computer). The machine is a device capable of calling the stored instructions from the storage medium and operating according to the called instructions, and may include the electronic apparatus (e.g., a TV) according to the disclosed embodiments.

Meanwhile, the machine-readable storage medium may be provided in the form of a non-transitory storage medium. Here, the term "non-transitory storage medium" only means that the storage medium is a tangible device and does not include a signal (e.g., an electromagnetic wave), and does not distinguish between a case where data is semi-permanently stored in the storage medium and a case where data is temporarily stored in the storage medium. For example, the "non-transitory storage medium" may include a buffer in which data is temporarily stored.

When the instructions are executed by the processor, the processor may perform functions corresponding to the instructions directly or by using other components under the control of the processor. The instructions may include code generated or executed by a compiler or an interpreter.

While preferred embodiments of the present disclosure have been illustrated and described above, the present disclosure is not limited to the above-described specific embodiments, and various modifications may be made by those skilled in the art to which the present disclosure pertains without departing from the gist of the present disclosure as claimed in the claims, and such modifications should not be individually understood from the technical idea or scope of the present disclosure.

## Claims

1. An electronic apparatus comprising:
a plurality of communication interfaces;
a microphone;
memory storing at least one instruction; and
a processor connected to the plurality of communication interfaces, the microphone, and the memory and configured to control the electronic apparatus,
wherein the processor, by executing the at least one instruction, is configured to:
transmit an advertising signal including an advertising packet through a first communication interface among the plurality of communication interfaces;
based on a preset sound generated from an external apparatus being received through the microphone, identify the external apparatus for a communication connection based on the preset sound, and transmit the advertising signal in a preset pattern through the first communication interface; and
based on a response signal being received based on the advertising signal of the preset pattern, perform a communication connection with the external apparatus through the first communication interface.

2. The electronic apparatus of claim 1, wherein the processor is configured to:
after a communication connection is established with an external apparatus through the first communication interface, transmit a signal including code information for a secure connection through a second communication interface; and
based on a response signal being received from the external apparatus in response to the signal including the code information, perform a secure communication connection with the external apparatus through the first communication interface.

3. The electronic apparatus of claim 2, wherein the processor is configured to:
after the secure communication connection is performed, transmit information for a communication connection through a third communication interface through the first communication interface; and
perform a communication connection with the external apparatus through the third communication interface based on information for a communication connection through the third communication interface.

4. The electronic apparatus of claim 3, wherein the processor is configured to:
transmit, through at least one of the first communication interface or the third communication interface, a control command to at least one peripheral device to control transmission of a signal including code information for the secure connection to the external apparatus.

5. The electronic apparatus of claim 3, wherein the first communication interface is a Bluetooth communication interface;
wherein the second communication interface is an IR communication interface; and
wherein the third communication interface is a Wi-Fi communication interface.

6. The electronic apparatus of claim 3, wherein the processor is configured to transmit an audio signal to the external apparatus through the Wi-Fi communication interface.

7. The electronic apparatus of claim 3, wherein the information for a communication connection through the third communication interface includes information on an access point to which the electronic apparatus is connected and information on a password of an access point.

8. The electronic apparatus of claim 2, wherein the code information for the secure connection includes information corresponding to the identified external apparatus.

9. The electronic apparatus of claim 1, wherein the preset sound is different according to model information of an external apparatus.

10. The electronic apparatus of claim 1, wherein the preset pattern is a pattern in which transmission of the advertising signal is turned on and off a preset number of times.

11. A control method of an electronic apparatus, comprising:
transmitting an advertising signal including an advertising packet through a first communication interface among a plurality of communication interfaces;
based on a preset sound generated from an external apparatus being received through a microphone, identifying the external apparatus for a communication connection based on the preset sound, and transmitting the advertising signal in a preset pattern through the first communication interface; and
based on a response signal being received based on the advertising signal of the preset pattern, performing a communication connection with the external apparatus through the first communication interface.

12. The method of claim 11, comprising:
after a communication connection is established with an external apparatus through the first communication interface, transmitting a signal including code information for a secure connection through a second communication interface; and
based on a response signal being received from the external apparatus in response to the signal including the code information, performing a secure communication connection with the external apparatus through the first communication interface.

13. The method of claim 12, comprising:
after the secure communication connection is performed, transmitting information for a communication connection through a third communication interface through the first communication interface; and
performing a communication connection with the external apparatus through the third communication interface based on information for a communication connection through the third communication interface.

14. The method of claim 13, further comprising:
transmitting, through at least one of the first communication interface or the third communication interface, a control command to at least one peripheral device to control transmission of a signal including code information for the secure connection to the external apparatus.

15. The method of claim 13, wherein the first communication interface is a Bluetooth communication interface;
wherein the second communication interface is an IR communication interface; and
wherein the third communication interface is a Wi-Fi communication interface.
